# EUROPEAN PATENT APPLICATION

(11) **EP 2 966 621 A1**
(43) Date of publication of application: **13.01.2016**
(21) Application number: 14176392.0
(22) Date of filing: 09.07.2014
(51) Int. Cl.: G06T 19/20

(54) **Method and system for converting an existing 3D model into graphical data**

(71) Applicant: Donya Labs AB, 583 30 Linköping (SE)
(72) Inventor: Lindahl, Ulrik, 590 73 Ljungsbro (SE); Johansson, Gustaf, 111 24 Stockholm (SE)
(74) Representative: Awapatent AB

(57) **Abstract**

A method and system for converting an existing 3D model into graphical data suitable for use with at least one of a plurality of computer systems. The 3D model is stored on a storage server, a pre-processing unit creates a set of individually optimized simplified meshes, each simplified meshes having a degree of simplification and a mapping structure. A user is allowed to interact with a visualization of the 3D model in a graphical user interface to provide the 3D model with selected surface properties, and to select a target computer system from the plurality of computer systems and a degree of simplification. The graphical data is created based on the selected surface properties and an appropriate simplified mesh in the set of simplified meshes, and a preview of the graphical data is shown on the graphical user interface as it would appear on the target computer system. The invention provides an efficient work flow and a quick preview of the graphical data.

## Description

### TECHNICAL FIELD

The present invention generally relates to computer graphics and more specifically a method and system for converting an existing 3D model into graphical data suitable for use with at least one of a plurality of computer systems. The present invention also relates to a computer program product.

### BACKGROUND OF THE INVENTION

Creation and visualization of computer graphics takes an ever increasing importance in diverse fields of computing such as computer aided design (CAD), architectural walkthroughs, simulations, medical visualization and computer games. The visualization of computer graphics also often requires that interaction with the model takes place at an interactive frequency of greater than 10 frames per second.

A common trend for computer graphics is the increasing amount of complexity and therefore size of the computer graphic models. For instance, highly detailed models used in animated movies usually goes through pre-processing steps taking on the order of several hundreds if not thousands of hours of processing time before they are finished. Likewise the original data for computer graphics models used for CAD originating from mathematical models such as NURBS or subdivision surfaces may comprise on the order of millions of triangles and vertices.

Hence, those 3D models are computationally very expensive and thus require specialized graphics systems to handle, furthermore they are generally never able to be handled interactively. The development of computer hardware is not likely to provide interactive handling of those 3D models since the size of the computer graphics and the size of the secondary computer memory is increasing at faster rates than the development of thereto related hardware. 3D models are with few exceptions represented using triangle meshes or quad meshes, or even more generally using a plurality of polygons. These meshes are typically not optimized for display or simulation performance. In most applications, the initial meshes can usually be replaced by optimized simplified versions that are approximations with far fewer faces, or containing other properties that make them more suited for particular applications such as those mentioned earlier.

In order for a user to provide such optimized versions suitable for e.g. a target computer system, the user has to tessellate an existing 3D model to get an initial mesh and then apply properties to the initial mesh such as material, lighting etc. in order to acquire the aesthetic look and/or the functions he or she desires. For example, a chosen material might provide both virtual physical characteristics such as friction and/or weight to a digital object and texture, and the lighting will allow a user to see what the object will look like in later visualizations of that object. However, providing an optimized version of the 3D model with applied properties requires sending the initial mesh and applied properties to a processing unit which optimizes the initial mesh and applied properties to provide a less computationally heavy simplified mesh with the corresponding applied properties. The simplification can be made under certain conditions, e.g. a maximum number of vertices or polygons. This optimization process usually takes on the order of several hours or more. Hence, when the user sees the final result, the simplified mesh with applied properties, he may then decide that the optimized version does not fit with the required fidelity etc. Therefore, he must start the process all over and has lost hours or days of work.

Hence, the current process is inefficient and providing optimized versions of 3D models with applied properties for a target computer system is time consuming. Providing optimized versions for a plurality of computer systems requires a user to perform this process for each optimized version and is therefore very time consuming. An alternative is to use the optimized version for several computer systems, with the drawback that some computer systems will find the optimized version computationally heavy, while some computer system would be able to handle an optimized version with higher fidelity.

Hence, there is a need to provide an improved process that can reduce the amount of time it takes a user, typically a graphical artist, to provide optimized versions of an existing 3D model suitable for a specific computer system, and preferably a plurality of computer systems.

### SUMMARY OF THE INVENTION

With regards to the above-mentioned needs, it is a general object of the present invention to provide a of a method or system for converting existing 3D models which can provide a quicker visualization of an optimized 3D model in a short amount of time, such that a user can determine if the optimized version is of a sufficient quality.

According to a first aspect of the invention, these and other objectives are achieved by a method for converting an existing 3D model into graphical data suitable for use with at least one of a plurality of computer systems, comprising storing the 3D model on a storage server accessible to a pre-processing unit. Creating a set of individually optimized simplified meshes, in the pre-processing unit, each simplified meshes having a degree of simplification and a mapping structure for mapping points on a face of the simplified mesh to a corresponding point on the 3D model, the degree of simplification and the mapping structure being suitable for one of the computer systems. In a graphical user interface, allowing a user to interact with a visualization of the 3D model to provide the 3D model with selected surface properties including at least one of material and illumination, and selecting a target computer system from the plurality of computer systems and a degree of simplification. The method further comprises creating the graphical data based on the selected surface properties and an appropriate simplified mesh in the set of simplified meshes, the appropriate simplified mesh having the selected degree of simplification and a mapping structure corresponding to the target computer system, and outputting a preview of the graphical data on the graphical user interface as it would appear on the target computer system.

The present invention is based on the realization that by pre-processing and in advance creating a set of individually optimized meshes, the graphical data can be previewed on a graphical user interface as it would appear on a target computer system in a short amount of time. Hereby, it should be understood that the process of creating optimized simplified meshes will still take a large amount of time, but the step of creating graphical data corresponding to the visualization of the existing 3D model from simplified meshes and selected surface properties will be reduced by orders of magnitude in time. Thus, the present invention allows a user to send an existing 3D model to a storage server where it is pre-processed, after which the user may perform operations in a graphical user interface providing the existing 3D model with surface properties. Then, by using the in advance created simplified meshes and mapping structures, graphical data is created which represents a preview of the graphical data as it would appear on the target computer system in a short amount of time. Thereby, the present invention creates the possibility for the user to interact and adapt the process without waiting for a long optimization process to occur.

The creation of the graphical data and the output of the preview may be at least 10 times faster than simplifying the 3D model with the selected surface properties directly. In other words, the graphical data and the preview may be created and shown at least 10 times faster than creating the graphical data without the simplified meshes and the mapping structure. The present invention thus enables a much faster work flow.

It should be noted that the existing 3D model may be represented by an initial mesh. If the 3D model is not represented by an initial mesh the method may further comprise tessellating the 3D model to provide an initial mesh in the pre-processing unit prior to creating the simplified meshes.

The initial mesh may comprise on the order of millions of vertices and polygons, such as at least 1000000 vertices, which provides an initial mesh which has a high fidelity to the existing 3D model. Further, a high number of vertices in the initial mesh may provide the simplified meshes with more possibility to differ in their degrees of simplification. Hence, it should be understood that by degree of simplification the simplified meshes can comprise a much lower number of polygons such as half, a tenth or even a thousandth. This means that an initial mesh comprising on the order of millions of vertices can lead to simplified meshes having as few as just hundreds or thousands of vertices and polygons. Processes for providing such simplified meshes are well known in the art, amongst which the applicant has several proprietary methods which provides simplified optimized meshes with a high, albeit lower than the initial mesh, fidelity to the existing 3D model. Examples are given in US patent 8,698,809 herewith incorporated by reference.

The mapping structure will describe how to map points on a face of the simplified optimized mesh to a corresponding point on the existing 3D model, enabling the selected surface properties to also be applied to the simplified mesh and thereby the graphical data. Since the simplified meshes will comprise fewer vertices than the existing 3D model, it should be understood that the mapping structure can map several points in the existing 3D model to a single point in a simplified mesh. Hence, the mapping structure also describes how to combine several points. Further, the mapping structure may comprise information about if the existing 3D model or initial mesh comprises a plurality of object and their identification in order to provide more data to the graphical data. Examples of surface properties include a normal direction in each point, surface texture, reflections, flexing, and interactivity.

The degree of simplification being suitable for one of the computer systems may be assessed based on one of the processing power of the computer systems, the graphical display capabilities and how the computer systems are intended to interact with the graphical data. For a computer system with less processing power the degree of simplification can be larger. Hereby, it should be understood that a more powerful computer system such as a gaming console can have a smaller degree of simplification. In the same manner simplified meshes intended to be used for computer systems with less processing power, e.g. a Smartphone or other kinds of portable devices, can have a larger degree of simplification. Therefore, the degree of simplification being suitable for one of the computer system can also be based in a similar manner on the graphical display capabilities of the computer system. Likewise, that the degree of simplification and the mapping structure are suitable may be selected based on how the computer systems are intended to interact with the graphical data. Depending on what type of interaction the system has with the graphical data such as a keyboard and/or a mouse, a touch screen, a gaming hand control, a gesture based control or voice commands the degree of simplification is configured in accordance. For example, a small touch screen based interaction may not require highly complex graphical data and therefore the degree of simplification can be larger.

Further, and in a similar manner to what was just described, the step of selecting a degree of simplification may be automated based on e.g. the processing power of the target computer system, the graphical display capabilities of the target computer system and/or how the target computer system is intended to interact with the graphical data. Thereby, a user which only has knowledge of e.g. the target system or systems does not need specific knowledge regarding the degree of simplification.

According to one embodiment of the invention, the method may further comprise the steps of receiving user input allowing the user to reselect a degree of simplification, re-creating updated graphical data based on the selected surface properties and an alternative appropriate simplified mesh in the set of simplified meshes, the alternative appropriate simplified mesh having the reselected degree of simplification and a mapping structure corresponding to the target computer system, and outputting an updated preview of the updated graphical data on the graphical user interface as it would appear on the target computer system.

By allowing a user to reselect a degree of simplification a user which deems the quality or fidelity of the graphical data to be too low is instead provided with an updated preview of graphical data created from an alternative appropriate simplified mesh having a smaller degree of simplification and selected surface properties and thus having a higher quality or fidelity in accordance with the user's desires. Likewise, the user may want to further reduce the polygon count on a certain model and try out a simplified mesh having a larger degree of simplification. Hereby, another advantage of the invention should be realized in that the method is repeatable.

In other words, as a set of individually optimized simplified meshes each with a mapping structure are provided in advance, the user may quickly and in an interactive manner be presented with updated previews of the graphical data in accordance with a requirement of higher or lower quality. Thereby providing an efficient and iterative process and/or work flow where a user can within the set of individually optimized meshed choose the most desirable mesh. Moreover, if the target computer system is a plurality of target computer systems the user may be presented with a preview of all the graphical data and can thereby accept or reject graphical data in accordance with the demand of fidelity from each graphical data.

The pre-processing unit may be a local computing unit, a remote server, a computer cluster or networked computers. By local computing unit it should be understood that the pre-processing may also occur at the computer system the user uses to assign an existing 3D model. The local computing unit can then be the central processing unit of the computer, a graphical computing unit or a specific computing unit for the computer system in question. Likewise if the pre-processing unit is a remote server the pre-processing can be performed by a central processing unit of the remote server, a graphical computing unit or a specific computing unit for the remote server in question. Computer clusters and networked computers may divide a processing task in between them and can advantageously be used to speed up the task of pre-processing the existing 3D model.

The method may further comprise providing the graphical data to a publication server. The publication server can then be accessed by whoever requires the graphical data for their use and thus allows for selling or spreading the finished graphical data to a larger audience.

According to another embodiment of the invention, the set of individually optimized simplified meshes are previewed in the graphical user interface before interacting with a visualization of the initial mesh. Thereby, the user is able to choose which simplified mesh should be used in the step of creating the graphical data. Hence, the user is presented with the option of selecting the degree of simplification in a manner which is both intuitive and efficient.

According to one embodiment of the present invention, the method may further comprise the steps of storing preferences made by the user relating to one of the existing 3D model, the target computer system and the degree of simplification, using previously stored preferences to configure the tessellation of the initial mesh, and using previously stored preferences to select the target computer system and the degree of simplification. As a user may use the present invention several times, preferences can be used such that when the existing 3D model is stored on the storage server the target system and degree of simplification is automatically identified in order to not require any other instructions to the system. Thereby, time is saved and the user may spend time on other tasks. In the same manner the tessellation providing the initial mesh may be based upon previous preferences of the user. Hence, a user with preferences of working with a complex initial mesh will automatically receive an initial mesh with a high number of polygons and simplified optimized meshes with a low degree of simplification in accordance with the stored preferences. Similarly a user with stored preferences targeting computer system with a lower amount of computing power, e.g. portable devices, can automatically receive an initial mesh with a lower number of polygons and then simplified optimized meshes with a larger degree of simplification.

According to another embodiment of the invention, the method may further comprise the steps of storing the set of individually optimized simplified meshes and mapping structure with an identifier to the existing 3D model, determining if an identifier to a previously stored set of individually optimized simplified meshes and mapping structure for the existing 3D model exist, and creating the graphical data based on the selected surface properties and an appropriate simplified mesh in the previously stored set of simplified meshes, the appropriate simplified mesh having the selected degree of simplification and a mapping structure corresponding to the target computer system. An advantage with storing the simplified meshes and mapping structure with an identifier is thus that they can be used again for other purposes by the same user or by a second user. A user will then have access to the existing 3D model, the individually optimized simplified meshes and the mapping structure. Further, another advantage is that a second user which desires to optimize and provide surface properties to the same existing 3D model will directly be provided with an opportunity to do so in the graphical user interface in principle without any delay as he has access to the simplified meshes and the mapping structure. In other words, the simplified meshes can be stored, i.e. cached, and re-used in subsequent optimization processes for the existing 3D model, which further reduces the before a user can interact and provide a 3D model with surface properties. The identifier could be any suitable data structure or data tag, such as a hash, for connecting the existing 3D model with the simplified meshes.

According to a second aspect of the invention, these and other objectives are also achieved by a system for converting an existing 3D model into graphical data suitable for use with at least one of a plurality of computer systems. The system comprises a storage server for storing the 3D model, which is accessible to a pre-processing unit. The pre-processing unit being configured to create a set of individually optimized simplified meshes, each simplified meshes having a degree of simplification and a mapping structure for mapping points on a face of the simplified mesh to a corresponding point on the initial mesh. The degree of simplification and the mapping structure being suitable for one of the computer systems. The system further comprises a graphical user interface configured to allow a user to interact with a visualization of the initial mesh, and to provide the initial mesh with selected surface properties including at least one of material and illumination, and allow a user to select a target computer system from the plurality of computer systems and a degree of simplification. The pre-processing unit is further configured to create the graphical data based on the selected surface properties and an appropriate simplified mesh in the set of simplified meshes, the appropriate simplified mesh having the selected degree of simplification and a mapping structure corresponding to the target computer system. The graphical user interface outputs a preview of the graphical data is as it would appear on the target computer system.

Many features and advantages of the second aspect of the present invention are similar to the previously mentioned features and advantages of the first aspect.

Further features of, and advantages with, the present invention will become apparent when studying the appended claims and the following description. The skilled addressee realize that different features of the present invention may be combined to create embodiments other than those described in the following, without departing from the scope of the present invention.

### BRIEF DESCRIPTION OF THE DRAWINGS

The various aspects of the invention, including its particular features and advantages, will be readily understood from the following detailed description and the accompanying drawings, in which:
Fig. 1 a shows an example of a known prior art method of converting an existing 3D model;
Fig. 1b shows an example of converting an existing 3D model according to the general concept of the invention;
Fig. 2 is a flow chart illustrating a method for converting an existing 3D model into graphical data suitable for use with at least one of a plurality of computer systems according to an embodiment of the present invention;
Fig. 3 shows a specific example on using the present invention;
Fig. 4a shows a system for converting an existing 3D model into graphical data suitable for use with at least one of a plurality of computer systems according to an embodiment of the present invention;
Fig. 4b shows a system for converting an existing 3D model into graphical data suitable for use with at least one of a plurality of computer systems according to another embodiment of the present invention; and
Fig. 5 shows an alternative embodiment of the interactive window of the system prior to selecting and applying surface properties.

### DETAILED DESCRIPTION

The present invention will now be described more fully hereinafter with reference to the enclosed drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled addressee. Like reference characters refer to like elements throughout. Further, the present invention is discussed with reference to both a method and a system for converting an existing 3D model into graphical data suitable for use with at least one of a plurality of computer systems.

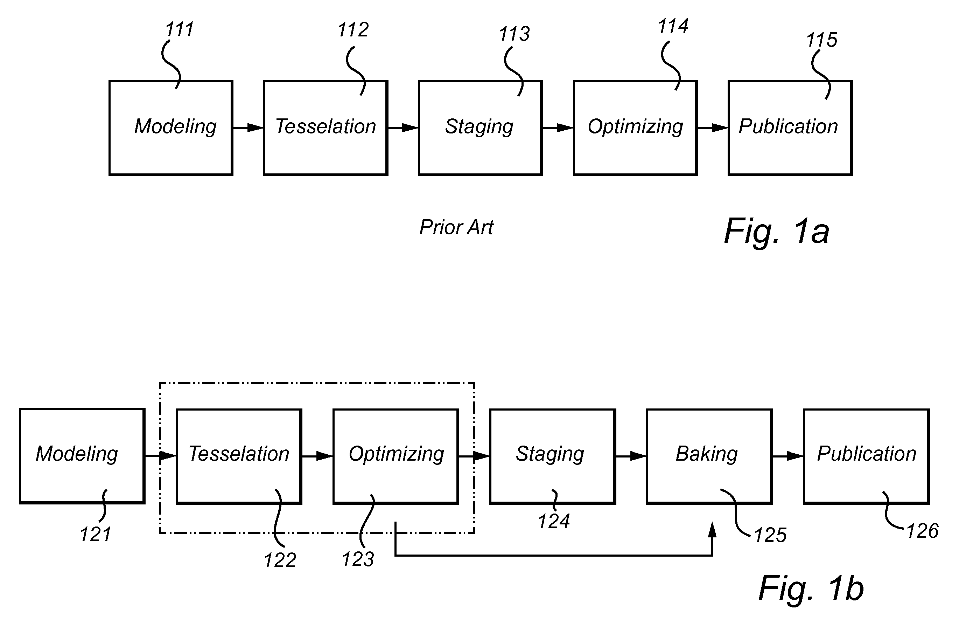

In Fig. 1a a known solution of providing graphical data suitable for use with one computer system from an existing 3D model is shown as a block diagram. An artist provides a 3D model through modeling 111 in a suitable software program (such as for example 3D Studio Max, Maya, etc.) or through CAD design alternatively including a mathematical process where the shape of the model is provided as an optimization for air resistance, weight or the like. Likewise, the model may be supplied through scanning a physical object in a 3D scanning apparatus which provides a virtual digital representation of the physical object.

Then, the model is tessellated 112 and is represented by a polygonal mesh which comprises vertices and edges connecting the vertices. In some types of modeling by software the step of tessellation may be unnecessary, as the model may already be represented by a polygonal mesh. In the next step of the known solution, the model is provided to a user at a staging step 113 where surface properties can be applied. Examples of surface properties are for example material and lighting. At the staging step 113 the artist sees a representation of the existing 3D model with the applied surface properties. After the step of staging 113, the 3D model with applied surface properties needs to be optimized in order to provide graphical data which is usable in an interactive manner or with a computer system having a lower computing capacity or lower memory capacity. As the only data available at this time is the tessellated 3D model and the applied surface properties, the step of optimization 114 is time-consuming and computationally heavy. The result of the optimization will therefore typically take on the order of several hours before being outputted and thereby visible for inspection. As the result of the optimization 114 may not be agreeable in terms of quality or fidelity to the original existing 3D model, the optimization process or choice of surface properties may need to be changed thereby requiring even more time. Further, this process needs to be repeated for each computer system the optimized model is to be used upon thereby also requiring a lot of time. Finally the optimized model(s) may be published 115 on a publication server or the like for use as digital models or assets in a computer game or other types of interactive digital environments.

Fig. 1b shows an example of converting an existing 3D model according to the general concept of the present invention. Similar to the known prior art solution described above an artist provides a model through modeling 121 in a suitable software program, or e.g. through a mathematical optimization process. Then, in the embodiment of the present invention the existing 3D model is tessellated 122 if not already represented by a polygonal mesh. The polygonal mesh resulting from the tessellation of the model (the existing 3D model) should be construed as an initial mesh. Further, an optimization process 123 occurs where a set of individually optimized simplified meshes are created. Each simplified mesh has a degree of simplification and a mapping structure for mapping points on a face of the simplified mesh to a corresponding point on the initial mesh. The degree of simplification is based on one of the computer systems to which the model may later be used. In other words, the degree of simplification will based on which computer system each simplified mesh is to be targeted to.

In the next step of staging 124, surface properties are chosen and applied to the initial mesh such that a user can by visual inspection configure the model in accordance with his/her preferences. When the user is satisfied with the result, he/she can request an optimized version of the initial mesh with applied surface properties. Then, in a step of baking 125, by using the in advance created simplified meshes and mapping structures, graphical data is created which represents a preview of the graphical data as it would appear on the target computer system in a short amount of time. The expression "baking" should, in the context of the present invention, be construed as the combination of several point and surface properties of the initial mesh being used to provide graphical data based on the simplified meshes and surface properties. Thereby, the present invention creates the possibility for the user to interact and iteratively adapt the process without waiting for a long optimization process to occur. When the graphical data has a desired look, it may be published 126 on a publication server for use as a digital virtual model or asset in interactive virtual environments.

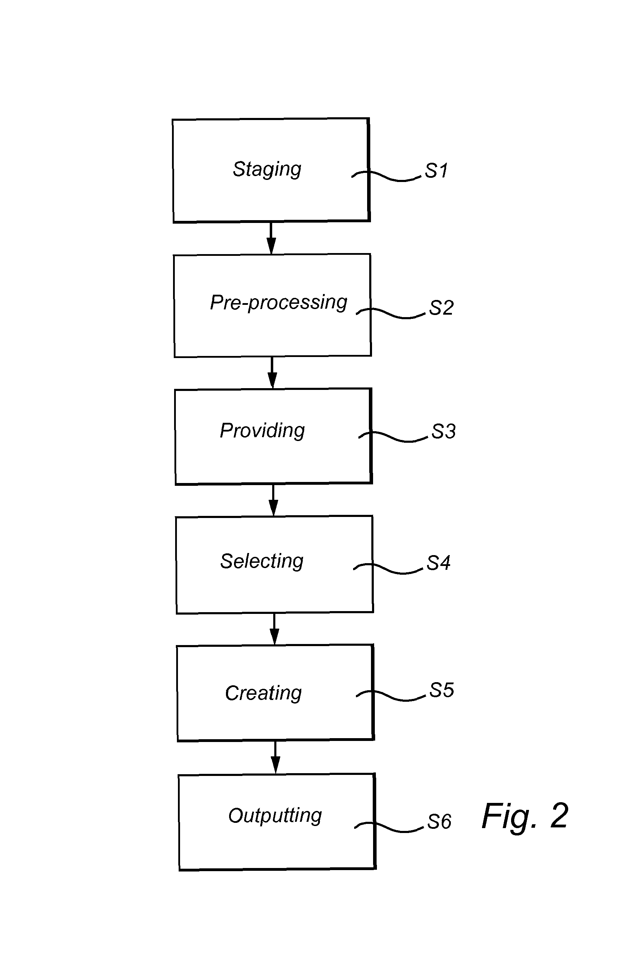

The present invention will now be described in more detail with Fig. 2 which shows a flow chart illustrating one embodiment of the present invention where a method for converting an existing 3D model into graphical data suitable for use with at least one of a plurality of computer systems is shown.

In the first step S1 a user stores an existing 3D model on a storage server. The existing 3D model can be represented in several different ways known to a person skilled in the art. For example, the existing 3D model can be a NURBS representation of a surface or be represented by subdivisions surfaces. Hence, the existing 3D model can be represented by different file types such as .step, .ige or .iges. Likewise the existing 3D model may be represented by a polygonal mesh comprising information regarding the vertices, edges and surfaces comprised in the polygonal mesh. The skilled addressee would contemplate the scope of the present invention to also encompass other types of file formats as well as mathematical representations of surfaces in three dimensions.

In the second step S2, the existing model is pre-processed by a pre-processing unit in order to create a set of individually optimized simplified meshes, each simplified meshes having a degree of simplification and a mapping structure for mapping points on a face of the simplified mesh to a corresponding point on the initial mesh, the degree of simplification and the mapping structure being based on one of the computer systems. Further, as an option the existing 3D model may be tessellated to provide an initial mesh.

Then in the third step S3, a user is allowed to interact with a visualization of the existing 3D model or initial mesh in a graphical user interface. The user can then provide the existing 3D model or initial mesh with selected surface properties. The selected surface properties can include at least material and/or illumination. Further, examples of such properties are a normal direction in each point, surface texture, reflections, flexing, and interactivity.

In the fourth steps S4, the user then selects a target computer system from the plurality of computer systems and a degree of simplification. By selecting a target computer system it should be understood that the degree of simplification can inherently be decided, such as being based on the processing power of the target computer system or the type of interaction the target computer system will have with the graphical data.

Then in the fifth step S5, graphical data based on the selected surface properties and an appropriate simplified mesh in the set of simplified meshes is created. The appropriate simplified mesh has a selected degree of simplification and a mapping structure which corresponds to the target computer system chosen.

In the sixth step S6, a preview of the graphical data is outputted on the graphical user interface as it would appear on the target computer system. Thereby, a quicker visualization of an optimized 3D model is outputted in a short amount of time, such that a user can determine if the optimized version is of a sufficient quality.

The expressions "computer system" and "target computer system" should be interpreted broadly as any machine or virtual machine e.g. a graphical engine capable of storing and rendering graphical data. Examples of such machine or virtual machines are webgl, unity, unreal engine 4, IOS, a tablet device, Smartphone or gaming consoles such as Playstation or Xbox, or a desktop computer. Further, a remote computer system such as a server or computing station 'streaming' a computer program or application to a screen should also be construed to be included in computer systems and target computer system. The graphical data may also be created in order 3D print the graphical data.

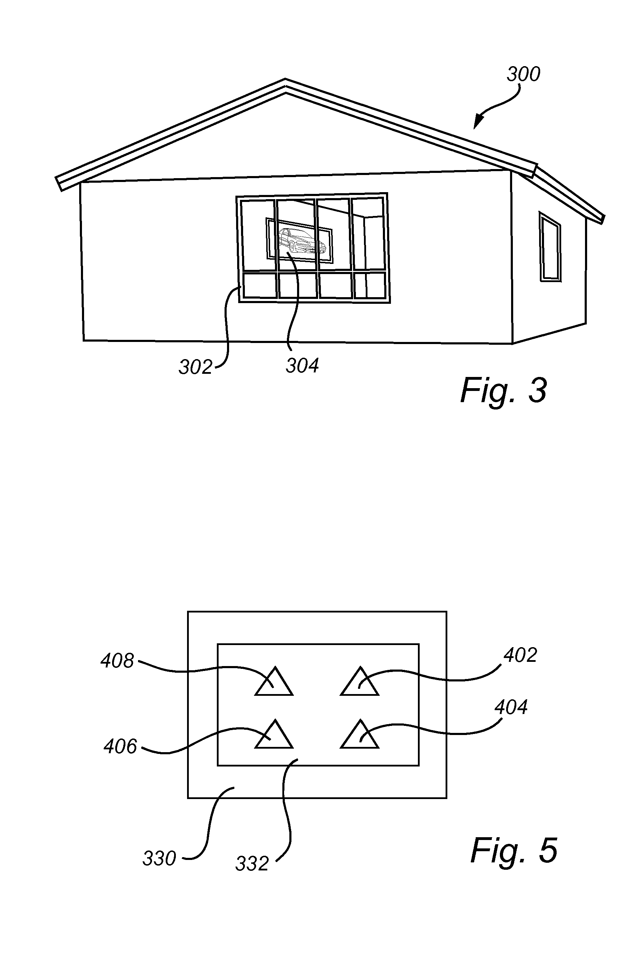

In Fig. 3 and in the following a concrete example on using the inventive method is given, this example should be understood to be non-limiting in regards to how the inventive concept can be applied to particular situations. In the example there is existing 3D model, a digital representation, of a house 300, having a window 302 behind which there is a painting 304. The 3D model is then stored on a storage server, and the storage server is accessible to a pre-processing unit. The pre-processing unit will then tessellate the 3D model if needed to provide an initial mesh, and then create individually optimized simplified meshes where each simplified mesh has a degree of simplification and a mapping structure which maps points on the simplified mesh to a point of the initial mesh. Then the user is allowed to interact with the 3D model or initial mesh of the 3D model and provide it with surface properties, and select a target computer system and a degree of simplification. Then, graphical data is created using the simplified meshes and the mapping structure. Hence, the graphical data in a point of the house 300, on the window 302 now comprises surface information, from to the mapping structure, from e.g. both the window 302 and the painting behind the window 304. The surface information is understood to be the information which was present before in the more complex model, such as the reflectivity of the window and the color of the painting and the interactivity of the window e.g. that the window may break in an interactive environment.

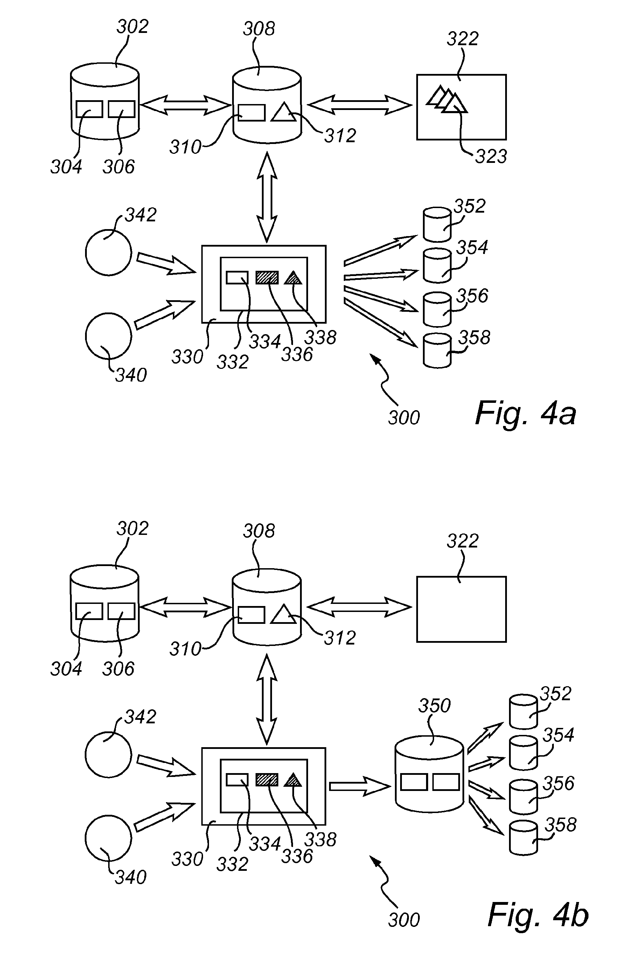

Fig. 4a shows a system 300 for converting an existing 3D model into graphical data suitable for use with at least one of a plurality of computer systems 352, 354, 356, 358 according to an embodiment of the present invention. The system 300 comprises an initial computing device 302 on which a user, typically an artist in 3D modeling has an existing 3D model or has produced a 3D model as described above. The existing 3D model can already be represented by a polygonal mesh, thereby already being an initial mesh 304, or the model 306 is represented by mathematical surface descriptions such as NURBS or subdivision surfaces. As NURBS and subdivision surfaces are used for the majority of all CAD application it is beneficial to be able to convert such data into the graphical data. The existing 3D model 306 may be of several different types known to a person skilled in the art. The existing 3D model can be represented by different file types such as .step, .ige or .iges.

Further, the system comprises a storage server 308 on which a user may store the existing 3D models 310. A storage server should herein be understood to be a device or stand alone computer system capable of storing digital information. The storage server 308 is accessible to a pre-processing unit 322 which is capable of tessellating the existing 3D model if needed and which is further capable of creating a set 323 of individually optimized simplified meshes. The set 323 of individually simplified meshes will typically comprise a plurality of simplified meshes, such as five to ten meshes. However, the number of simplified meshes in the set 323 will be decided for each application and there may be fewer simplified meshes such as just three or a larger number such as up to a hundred simplified meshes in the case where the graphical data is to be created for a plurality of computer systems. Each of the simplified meshes has a degree of simplification and a mapping structure for mapping points on a face of the simplified mesh to a corresponding point on the initial mesh. The degree of simplification and the mapping structure is based on one of the computer systems 352, 354, 356, 358. The pre processing unit 322 is preferably a local computing unit, a remote server, a computer cluster or networked computers. By local computing unit it should be understood that the pre-processing may also occur at the computer system the user uses to create or upload the existing 3D model to the storage server. The local computing unit can then be the central processing unit of the computer, a graphical computing unit or a specific computing unit for the computer system in question. Likewise if the pre-processing unit is a remote server the pre-processing can be performed by a central processing unit of the remote server, a graphical computing unit or a specific computing unit for the remote server in question. Computer clusters and networked computers may divide a processing task in between them and can advantageously be used to speed up the task of pre-processing the existing 3D model.

The system also comprises a computing device 330 on which an application/program user interface 332 is embodied and executed on. The type of computing device 330 is not an essential component of the invention, but as an example a personal computer (stationary or laptop), a tablet, Smartphone or the like is possible. It is also possible to provide the application program user interface 332 as a virtual machine in e.g. a web browser. To further reduce the hardware constrains on the computing device 330, it would according to the invention be possible to e.g. "on-demand" provide a user/customer with the functionality provided by means of the inventive concept. As an example, a user wanting to apply surface properties and inspect the result of those surface properties may, through a user interface 332 on the computing device 330, access a computer implementation of the conversion process running on e.g. a server (not shown), such solutions are typically referred to as "cloud" or "cloud-based".

Alternatively, the computing device 330 may be provided with software for producing the original image (such as for example 3D Studio Max, Maya, etc.), where the software running on the computing device 330 is adapted to access/interact with (by means of e.g. an API and "on-demand", as a subscription, as a fixed service, etc.) a computer implementation of the inventive concept running on the server (not shown). On the computing device 330 there is an interactive application window 332, i.e. a graphical user interface 332, in which a user interacts with the initial mesh 334 to apply surface properties 340, 342. This provides user with an interactive design environment where the initial mesh 334 may be colored and lighted by surface properties such as lighting and material choice on the surface. The user can then inspect the result of those choices on the initial mesh with applied surface properties 336. Then, the user selects a target computer system 352, 354, 356, 358 such as webgl, unity, unreal engine 4, IOS, tablet device, Smartphone, playstation, Xbox, a remote computer streaming a program or application, a desktop computer, 3D printer. The simplified meshes having a degree of simplification and a corresponding mapping structure will be used to quickly, create and output a preview 338 of the graphical data as it would appear on the target computer system 352, 354, 356, 358.

In one embodiment, the user may have chosen a plurality of target computer systems 352, 354, 356, 358 and the user may then be presented with a preview of the graphical data targeted to the different target computer systems 352, 354, 356, 358. Hence, the user can then visually inspect and accept or reject graphical data in accordance with the demand of fidelity for each graphical data and thereby accept or reject each graphical data individually. Further, and as described above, updated graphical data may then be re-created by using e.g. a re-selected degree of simplification or the like.

Fig. 4b shows another version of the system 300, which also comprises a publication server 350 on which the finished graphical data can be stored in order for the graphical data to be accessible as digital models or assets in a computer game or other types of interactive digital environments.

Fig. 5 shows an embodiment where a number of simplified meshes 402, 404, 406, 408 with varying degrees of simplification are shown in the user interface 332 on the computing device 330 prior to applying the surface properties 340, 342. The user can then select or deselect the different simplified meshes according to which ones the user finds suitable in fidelity or aesthetics. Hence, the user will deselect undesired examples and a simplified mesh having a smaller or larger degree of simplification will be used for constructing the desired graphical data. For example, the user may directly assess that the simplified mesh 402 does not have a shape or outline that will not provide a desired fidelity and deselects it. Likewise, the user may select the simplified mesh which is most desirable and that mesh simplified mesh will be used to create the graphical data.

The present disclosure contemplates methods, systems and program products on any machine-readable media for accomplishing various operations. The embodiments of the present disclosure may be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. When information is transferred or provided over a network or another communications connection (either hardwired, wireless, or a combination of hardwired or wireless) to a machine, the machine properly views the connection as a machine-readable medium. Thus, any such connection is properly termed a machine-readable medium. Combinations of the above are also included within the scope of machine-readable media. Machine-executable instructions include, for example, instructions and data which cause a general purpose computer, special purpose computer, or special purpose processing machines to perform a certain function or group of functions.

Although the figures may show a specific order of method steps, the order of the steps may differ from what is depicted. Also two or more steps may be performed concurrently or with partial concurrence. Such variation will depend on the software and hardware systems chosen and on designer choice. All such variations are within the scope of the disclosure. Likewise, software implementations could be accomplished with standard programming techniques with rule based logic and other logic to accomplish the various connection steps, processing steps, comparison steps and decision steps. Additionally, even though the invention has been described with reference to specific exemplifying embodiments thereof, many different alterations, modifications and the like will become apparent for those skilled in the art. Variations to the disclosed embodiments can be understood and effected by the skilled addressee in practicing the claimed invention, from a study of the drawings, the disclosure, and the appended claims. Furthermore, in the claims, the word "comprising" does not exclude other elements or steps, and the indefinite article "a" or "an" does not exclude a plurality.

## Claims

**1.** A method for converting an existing 3D model into graphical data suitable for use with at least one of a plurality of computer systems, comprising:
storing said 3D model on a storage server accessible to a pre-processing unit;
in said pre-processing unit, creating a set of individually optimized simplified meshes, each simplified meshes having a degree of simplification and a mapping structure for mapping points on a face of the simplified mesh to a corresponding point on the 3D model, said degree of simplification and said mapping structure being suitable for one of said computer systems;
in a graphical user interface, allowing a user to interact with a visualization of said 3D model to provide said 3D model with selected surface properties including at least one of material and illumination;
selecting a target computer system from said plurality of computer systems;
selecting a degree of simplification;
creating said graphical data based on said selected surface properties and an appropriate simplified mesh in said set of simplified meshes, said appropriate simplified mesh having said selected degree of simplification and a mapping structure corresponding to said target computer system; and
outputting a preview of said graphical data on the graphical user interface as it would appear on the target computer system.

**2.** The method according to claim 1, wherein said degree of simplification suitable for one of said computer systems is assessed based on one of the processing power of said computer systems, the graphical display capabilities of said computer systems and how the computer systems is intended to interact with said graphical data.

**3.** The method according to claim 1, wherein said existing 3D model is represented by an initial mesh.

**4.** The method according to claim 1, wherein the method further comprises tessellating said 3D model to provide an initial mesh in said pre-processing unit.

**5.** The method according to claim 1, wherein the method further comprises:
receiving user input allowing the user to reselect a degree of simplification;
re-creating updated graphical data based on said selected surface properties and an alternative appropriate simplified mesh in said set of simplified meshes, said alternative appropriate simplified mesh having said reselected degree of simplification and a mapping structure corresponding to said target computer system; and
outputting an updated preview of said updated graphical data on the graphical user interface as it would appear on the target computer system.

**6.** The method according to claim 1, wherein said step of selecting a degree of simplification is automated based on one of the processing power of said target computer system, the graphical display capabilities of said target computer system and how the target computer system is intended to interact with said graphical data.

**8.** The method according to claim 1, wherein creating said graphical data and outputting said preview is at least 10 times faster than simplifying said 3D model with said selected surface properties directly.

**9.** The method according to claim 1, wherein the method further comprises providing said graphical data to a publication server.

**10.** The method according to claim 1, wherein said set of individually optimized simplified meshes are previewed in said graphical user interface before interacting with a visualization of said initial mesh.

**11.** The method according to claim 1, wherein the method further comprises the steps of:
storing preferences made by the user relating to one of said existing 3D model, said target computer system and said degree of simplification;
using previously stored preferences to configure the tessellation of the initial mesh; and
using previously stored preferences to select said target computer system and said degree of simplification.

**12.** The method according to claim 1, wherein the method further comprises the steps of:
storing said set of individually optimized simplified meshes and mapping structure with an identifier to said existing 3D model;
determining if an identifier to a previously stored set of individually optimized simplified meshes and mapping structure for said existing 3D model exists; and
creating said graphical data based on said selected surface properties and an appropriate simplified mesh in said previously stored set of simplified meshes, said appropriate simplified mesh having said selected degree of simplification and a mapping structure corresponding to said target computer system.

**13.** A system for converting an existing 3D model into graphical data suitable for use with at least one of a plurality of computer systems, comprising:
a storage server for storing said 3D model on accessible to a pre-processing unit;
said pre-processing unit being configured to:
tessellate said 3D model and to provide an initial mesh, and
create a set of individually optimized simplified meshes, each simplified meshes having a degree of simplification and a mapping structure for mapping points on a face of the simplified mesh to a corresponding point on the initial mesh, said degree of simplification and said mapping structure being suitable for one of said computer systems;
graphical user interface configured to:
allow a user to interact with a visualization of said initial mesh to provide said initial mesh with selected surface properties including at least one of material and illumination, and
allow a user to select a target computer system from said plurality of computer systems and select a degree of simplification;
wherein said pre-processing unit is further configured to create said graphical data based on said selected surface properties and an appropriate simplified mesh in said set of simplified meshes, said appropriate simplified mesh having said selected degree of simplification and a mapping structure corresponding to said target computer system; and
wherein the graphical user interface outputs a preview of said graphical data is as it would appear on the target computer system.

**14.** The system according to claim 13, wherein the graphical user interface is further configured to:
receive user input allowing the user to reselect a degree of simplification, and the pre-processing unit is further configured to:
re-create updated graphical data based on said selected surface properties and an alternative appropriate simplified mesh in said set of simplified meshes, said alternative appropriate simplified mesh having said reselected degree of simplification and a mapping structure corresponding to said target computer system; and
the graphical user interface outputs an updated preview of the graphical data on the graphical user interface as it would appear on the target computer system.

**15.** The system according to claim 13, wherein the system further comprises a publication server for storing said graphical data.

**16.** The system according to claim 13, wherein the system further comprises the storage means configured to:
store preferences made by the user relating to one of said existing 3D model, said target computer system and said degree of simplification;
use previously stored preferences to configure the tessellation of the initial mesh; and
use previously stored preferences to select said target computer system and said degree of simplification.

**17.** The system according to claim 13, wherein pre-processing unit is one of a local computing unit, a remote server, a computer cluster and networked computers.

**18.** A computer program product configured to perform the method according to any one of claim 1-12 when executed on a processor.
